(19) Europäisches Patentamt
European Patent Office
Office européen des brevets

(11) **EP 3 502 158 A1**

(12) **EUROPÄISCHE PATENTANMELDUNG**

(43) Veröffentlichungstag:
**26.06.2019 Patentblatt 2019/26**

(21) Anmeldenummer: **17208595.3**

(22) Anmeldetag: **19.12.2017**

(51) Int Cl.:
*C08G 18/76* (2006.01)        *C08G 63/66* (2006.01)
*C08G 18/10* (2006.01)        *C08G 18/44* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD TN**

(71) Anmelder: **Covestro Deutschland AG
51373 Leverkusen (DE)**

(72) Erfinder: **Die Erfindernennung liegt noch nicht vor**

(74) Vertreter: **Levpat
c/o Covestro AG
Gebäude 4825
51365 Leverkusen (DE)**

(54) **POLYCARBONATPOLYOLE, POLYISOCYANATPREPOLYMERE UND POLYURETHAN- UND POLYURETHANHARNSTOFFELASTOMERE AUF DEREN BASIS**

(57)     Die vorliegende Erfindung betrifft neue hochwertige Polycarbonatpolyole, Verfahren zu deren Herstellung, daraus zugängliche Polyisocyanatprepolymere sowie Polyurethan (PUR)- und Polyurethanharnstoffelastomere, die in besonders anspruchsvollen Anwendungen einzigartige Kombinationen aus Verarbeitungsverhalten, Hydrolyse- und Oxidationsstabilität, mechanisch und mechanisch-dynamischen Eigenschaften aufweisen.

EP 3 502 158 A1

**Beschreibung**

Die vorliegende Erfindung betrifft neue hochwertige Polycarbonatpolyole, Verfahren zu deren Herstellung, daraus zugängliche Polyisocyanatprepolymere sowie Polyurethan (PUR)- und Polyurethanharnstoffelastomere, die in besonders anspruchsvollen Anwendungen einzigartige Kombinationen aus Verarbeitungsverhalten, Hydrolyse- und Oxidationsstabilität, mechanisch und mechanisch-dynamischen Eigenschaften aufweisen.

Polyurethanelastomere wurden vor über 60 Jahren erstmals basierend auf 1,5-Naphthalindiisocyanat (NDI; Desmodur® 15 von Covestro Deutschland AG) einem langkettigen Polyesterpolyol und einem kurzkettigen Alkandiol unter dem Handelsnamen Vulkollan® kommerzialisiert.

Als langkettige Polyole kommen neben Polyesterpolyolen auch Polyetherpolyole, Polycarbonatpolyole und Polyetheresterpolyole zum Einsatz. Die Wahl des langkettigen Polyols richtet sich hauptsächlich nach den Erfordernissen der jeweiligen Anwendung. Man spricht in diesem Zusammenhang auch von "maßgeschneiderten Eigenschaften". So werden z.B. Polyetherpolyole verwendet, wenn Hydrolysestabilität und Tieftemperatureigenschaften im Vordergrund stehen. Für Polyesterpolyole ergeben sich bezüglich der mechanischen Eigenschaften und UV-Stabilität gegenüber Polyetherpolyolen Vorteile. Nachteilig ist jedoch beispielsweise die geringe Mikrobenbeständigkeit. Polycarbonatpolyole kombinieren in gewisser Weise die Vorteile von Polyether- und Polyesterpolyolen, sind aber dazu im Vergleich relativ teuer.

Die Vorteile der Polycarbonatpolyole liegen insbesondere in ihrer UV-Stabilität, Hydrolysestabilität und ihren mechanischen Eigenschaften.

Nachteilig an Polyester- und Polycarbonatpolyolen sowie an ihren Mischtypen, den Polyestercarbonatpolyolen, gegenüber den Polyetherpolyolen ist deren meist weniger vorteilhaftes Tieftemperaturverhalten. Dies ist strukturell bedingt und rührt von der erhöhten Polarität der Carbonylgruppen her, die normalerweise dazu führt, dass Polyester- und Polycarbonatpolyole teilkristallin sind, wohingegen Polyetherpolyole, insbesondere die auf Propylenoxid basierten Typen als kommerziell größte Gruppe, amorph sind. Mit der bekannten empirischen Regel von Beaman und Bayer (M.D. Lechner, K. Gehrke u. E.H. Nordmeier, Makromolekulare Chemie, Birkhäuser Verlag 1993, S. 327)

$$T_g = 2/3 \ T_m \qquad\qquad ( \ I \ )$$

wird für teilkristalline Systeme der Zusammenhang zwischen der Glasübergangstemperatur, ($T_g$) und der Schmelztemperatur, ($T_m$) verdeutlicht. Weisen beispielsweise Polycarbonatpolyole Schmelztemperaturen der teilkristallinen Anteile von ca. 70°C (343K) auf, so liegen die Glasübergangstemperaturen der amorphen Bereiche in der Größenordnung von - 43°C (230 K). Diese Werte gelten weitgehend auch dann, wenn die Polycarbonatpolyole als Weichsegmentpolyole in segmentierten Multiblockcopolyurethanen, z.B. in Form von thermoplastischen Polyurethanelastomeren (TPU) oder Polyurethangießelastomeren in eingebauter Form vorliegen. Hieraus wird deutlich, dass es wünschenswert ist, Polycarbonatpolyole zur Verfügung zu stellen, die einen möglichst niedrigen Schmelzbereich aufweisen. Zum einen wird dadurch die Verarbeitung erleichtert und zum anderen wird der Gebrauchstemperaturbereich in Folge der dann ebenfalls abgesenkten Glasübergangstemperatur zu tieferen Temperaturen hin erweitert.

Der Bereich der Gebrauchstemperatur wird nach oben hin durch das thermische Verhalten der Hartsegmente (z.B. Urethan-, Harnstoff-, Isocyanurat-Gruppen etc.), d.h. der Strukturelemente, die auf die Polyisocyanatbausteine zurückgehen, begrenzt.

Nachteilig am Einsatz von 1,6-Hexandiol als Diolkomponente für beispielsweise Polycarbonat- oder Polyadipatpolyole, wie sie in der Polyurethanchemie Verwendung finden, ist die erhöhte Viskosität und der vergleichsweise hohe Schmelzpunkt bei ansonsten identischen Kenngrößen (Molekulargewicht und Funktionalität).

Es hat nicht an Versuchen gefehlt, den Schmelzbereich des für Polyurethanelastomere technisch wichtigsten Polycarbonatpolyols, des Hexandiolpolycarbonatpolyols, so zu modifizieren, dass spezielle Anforderungen möglichst vieler Anwendungen abgebildet werden können. In DE-A 3717060 wird beispielweise Hexandiol teilweise z.B. durch Hexandiolethereinheiten ersetzt, mit der Folge eines gegenüber reinem Hexandiolpolycarbonatpolyol verminderten kristallinen Anteils und eines zu tieferen Temperaturen hin verschobenen Schmelzbereiches. Nachteilig an diesem Verfahren ist jedoch, dass diese Hexandiolethereinheiten nur sehr aufwendig hergestellt werden können, so dass wichtige Anwendungen nicht wirtschaftlich zugänglich sind.

H. Tanaka und M. Kunimura (Polymer Engineering and Science, Vol. 42, No. 6, S. 1333, (2002)) weisen einen Weg auf, der zumindest den vorgenannten Nachteil beseitigt, indem Copolycarbonatpolyole aus 1,6-Hexandiol und 1,12-Dodecandiol hergestellt werden, die deutlich gegenüber ihren Homopolycarbonatpolyolen abgesenkte Schmelztemperaturen aufweisen. Mit der verwendeten Messmethodik bestimmten sie den Schmelzpunkt von Hexandiolpolycarbonatpolyol zu 47,4°C und von 1,12-Dodecanpolycarbonatpolyol zu 65,5°C, während ein Copolycarbonatpolyol mit einer Zusammensetzung von 70 Gew.-Tle. Hexandiol : 30 Gew.-Tle. 1,12-Dodecandiol bei 29,1°C aufschmilzt, somit eine Absenkung des Schmelzbereiches von 18,3 °C bzw. 36,3°C gegenüber den Homopolymeren vorliegt. In ähnlicher Weise verhalten sich auch die Schmelzwärmen [J/g], die dann ein Minimum aufweisen, wenn das Polycarbonatpolyol aus 70 Teilen Hexandiol und 30 Teilen 1,12-Dodecandiol aufgebaut ist.

Trotz dieser im Prinzip vielversprechenden Ansätze, die im Übrigen auch auf daraus aufgebaute thermoplastische Polyurethanelastomere angewendet wurden, konnte sich dieser Weg bislang nicht oder zumindest nicht in nennenswertem Umfang technisch durchsetzen.

Ein wesentlicher Grund hierfür ist, dass insbesondere 1,12-Dodecandiol preislich so ungünstig einsteht, dass der dadurch resultierende Preis des Polycarbonatpolyols bzw. Copolycarbonatpolyols und damit letztendlich des Polyurethanelastomeren so hoch wird, dass die Vorteile, die sich durch Verwendung bzw. Mitverwendung von 1,12-Dodecandiol ergeben können, überkompensiert werden.

Dies bedeutet, dass die evtl. technischen Vorteile zu teuer erkauft werden müssten.

Aufgabe der vorliegenden Anmeldung war es daher, neue Polycarbonatpolyole als Bausteine für Polyurethane, insbesondere Polyurethangießelastomere und/oder thermoplatische Polyurethane bereit zu stellen, deren Ausgangsverbindungen einfach zugänglich und kommerziell breit verfügbar sind und die gleichzeitig eine Hydrolysestabilität und vorteilhafte Tieftemperatureigenschaften sowie ebensolche mechanischen Eigenschaften und UV-Stabilität aufweisen.

Weiterhin ist es Aufgabe der Erfindung, neue Polyurethane zur Verfügung zu stellen, die die vorgenannten Nachteile wie beschränkte Verfügbarkeit und mangelnde Wirtschaftlichkeit nicht aufweisen und die insbesondere auf den neuen Polycarbonatpolyolen basieren.

Gegenstand der Erfindung sind daher Polycarbonatpolyole mit einer OH-Zahl von 40 bis 80 mg KOH/g und einer mittleren Funktionalität von 1,9 bis 2,2 enthaltend das Umsetzungsprodukt aus

A) mindestens einem $\alpha,\omega$-Alkandiol mit 4 bis 8 C-Atomen und

B) mindestens einem Polytetrahydrofuran und ggf.

C) Diethylenglykol
mit mindestens einer

D) Carbonylkomponente ausgewählt aus der Gruppe bestehend aus Diarylcarbonaten, Dialkylcarbonaten, zyklischen Alkylencarbonaten und $COCl_2$, bevorzugt Diphenylcarbonat, und/oder deren Mischungen.

Die Molmasse des Polycarbonatpolyols liegt erfindungsgemäß im Bereich von 1200 bis 2500 Da. Die bei 75°C gemessene Viskosität der Polycarbonatpolyole liegt zwischen 500 und 5000 mPas, bevorzugt zwischen 1000 und 3500 und besonders bevorzugt zwischen 1500 und 3000 mPas. Die mittlere Funktionalität liegt im Bereich von 1,9 bis 2,2. Dies wird dadurch erreicht, dass man zusätzlich ggf. Monoole oder Polyole zusetzt. Beispiele für Polyole sind in diesem Zusammenhang 1,1,1-Trimethylolpropan und für Monoole 1-Octanol. Funktionalitäten unter 2 können auch dadurch erhalten werden, dass die eingesetzten Dialkyl- und Diarylcarbonate nicht vollständig abreagieren, so dass Alkylcarbonato- bzw. Arylcarbonato-Endgruppen entstehen.

In einer Ausführungsform der Erfindung ist das mindestens eine $\alpha, \omega$-Alkandiol mit 4 bis 8 C-Atomen (A) ausgewählt aus der Gruppe bestehend aus 1,4-Butandiol, 2-Methylpropandiol-1,3, 1,5-Pentandiol, 3-Methylpentandiol-1,5, 1,6-Hexandiol und 1,8-Octandiol, bevorzugt 1,6-Hexandiol, und/oder deren Mischungen.

In einer weiteren Ausführungsform der Erfindung weist das mindestens eine Polytetrahydrofuran (B) zahlenmittlere Molekulargewichte im Bereich von 250 bis 2900 Da, bevorzugt 600 bis 2500, besonders bevorzugt von 650 bis 2000 auf.

In einer anderen Ausführungsform der Erfindung liegt das molare Verhältnis von Carbonatgruppen zu Ethergruppen im Bereich von, 0,2:1 bis 3,5:1 bevorzugt im Bereich von 0,3:1 bis 3:1, besonders bevorzugt im Bereich von 0,4:1 bis 2,8:1.

In einer weiteren Ausführungsform der Erfindung liegt das bei einer für mehr als 4 Wochen bei Raumtemperatur gelagerten Probe ein mittels DSC bei einer Heizrate von 10 °C/min bestimmte Maximum eines Schmelzendotherms im Bereich von 9 bis 59 °C, bevorzugt 10 - 50 °C.

Wie sich in der Praxis gezeigt hat, kann die Umsetzung der Komponenten A), B) und ggf. C) mit Diphenylcarbonat als Carbonylkomponente D) jedoch nicht nach den dem Fachmann bekannten Verfahren erfolgen. Normalerweise würde man alle Einsatzstoffe gemeinsam vorlegen und mittels der aliphatischen Hydroxylgruppen die Alkoholkomponente aus dem entsprechenden Carbonat, beispielsweise Phenol aus Diphenylcarbonat, oder HCl aus Phosgen freisetzen und abdestillieren.

Nachteiligerweise hat es sich jedoch gezeigt, dass bei Anwesenheit aller Komponenten in einem Ansatz die Polykondensationsreaktion in erheblichem Umfang gestört ist, d.h. dass im vorliegenden Beispiel die Phenolabspaltung aus Diphenylcarbonat zu einem frühen Zeitpunkt zum Erliegen kommt. Hierdurch wird die angestrebte Molmasse des Polycarbonatpolyols bei Weitem nicht erreicht; des Weiteren weisen solche Produkte Endgruppen auf, die nicht NCO-reaktiv sind, also beispielsweise Phenoxy- und Phenylcarbonatendgruppen. Derartige Produkte sind selbstverständlich als Rohstoffe für die Herstellung von Polyurethanen vollkommen unbrauchbar und damit wertlos.

Es war daher eine weitere Aufgabe der vorliegenden Erfindung, ein Verfahren bereit zu stellen, das die erfindungsgemäßen Polycarbonatpolyole erstmalig, zuverlässig und möglichst einfach zugänglich macht.

Überraschenderweise wurde gefunden, dass eine spätere Zugabe von Komponente B) die oben genannten Nachteile überwindet.

Ein weiterer Gegenstand der vorliegenden Erfindung ist daher ein

Verfahren zur Herstellung von Polycarbonatpolyolen, dadurch gekennzeichnet, dass ein zweistufiges Verfahren angewendet wird, bei dem

in einer ersten Stufe in Gegenwart eines Katalysators ein Zwischenprodukt aus

A) mindestens einem $\alpha$, $\omega$-Alkandiol mit 4 bis 8 C-Atomen,

C) ggf. Diethylenglykol und

D) mindestens einer Carbonylkomponente aus der Gruppe bestehend aus Diarylcarbonaten, Dialkylcarbonaten, Alkylencarbonaten und COCh, besonders bevorzugt Diphenylcarbonat, und/oder deren Mischungen

hergestellt wird und in einer zweiten Stufe mit

B) mindestens einem Polytetrahydrofuran

umgesetzt wird.

In der Praxis können Abweichungen zwischen theoretisch berechneter und experimentell bestimmter Hydroxylzahl des Zwischenproduktes auftreten; praktisch unterschreitet die experimentell bestimmte Hydroxylzahl die theoretisch erwartete meist um 3 bis 10 OHZ-Einheiten, kann sie aber in Einzelfällen auch mehr als 10 OHZ-Einheiten unterschreiten, da es beim destillativen Entfernen des abgespaltenen, niedermolekularen Reaktionsproduktes, beispielsweise des Phenols bei Verwendung von Diphenylcarbonat als Carbonylquelle, zu Verlusten von A) $\alpha$, $\omega$-Alkandiolen mit 4 bis 8 C-Atomen und ggf. C) Diethylenglykol kommen kann. Diese Verluste können zum Einen dadurch ausgeglichen werden, dass man diesen Verlust in Vorversuchen ermittelt und dementsprechend mehr der Substanzen A) $\alpha$, $\omega$-Alkandiolen mit 4 bis 8 C-Atomen und ggf. C) Diethylenglykol einsetzt, d.h. eine höhere Hydroxylzahl berechnet als eigentlich gewünscht, oder zum Anderen die zu niedrige, experimentell gefundene Hydroxylzahl des Zwischenproduktes dadurch ausgleicht, dass man im Rahmen der zweiten Reaktionsstufe die in der ersten Stufe aufgetretenen Verluste von A) und/oder C) in Stufe 2 zugibt und letztere gemeinsam mit B) Polytetrahydrofuran zur Umsetzung bringt.

Ein weiterer Gegenstand der vorliegenden Erfindung ist daher ein Verfahren zur Herstellung von Polycarbonatpolyolen wie beschrieben, wobei in der zweiten Stufe zusätzlich zu dem

B) mindestens einen Polytetrahydrofuran

zum Ausgleich der in der ersten Stufe teilweise entfernten Diole A) und/oder C)

A) mindestens ein $\alpha$, $\omega$-Alkandiol mit 4 bis 8 C-Atomen und/oder

C) Diethylenglykol

zugegeben wird.

Weiterhin Gegenstand der Erfindung ist ein Verfahren zur Herstellung von Polycarbonatpolyolen wie beschrieben, bei dem

in der ersten Stufe die Komponenten A) und/oder C) überschüssig in einer Menge eingesetzt werden, die eine Abweichung von 2 bis 20 Hydroxylzahleinheiten gegenüber der eigentlich angestrebten Hydroxylzahl ergibt.

In einer Ausführungsform des erfinderischen Verfahrens handelt es sich bei dem Katalysator um einen basischen Katalysator. Der Katalysator kann nach Abschluss der zweiten Stufe mit einer Broenstedtsäure neutralisiert werden.

In einer weiteren Ausführungsform des erfinderischen Verfahrens erfolgt die Umsetzung beider Stufen bei Temperaturen im Bereich von 100 °C bis 225 °C, bevorzugt 160 °C bis 210 °C.

Katalysatoren für das erfindungsgemäße Verfahren sind beispielsweise basische Katalysatoren wie Magnesiumhydroxidcarbonat Pentahydrat aber auch Oxide, Hydroxide, Alkoholate, Carboxylate und Phenolate der Alkali- und Erdalkalimetalle.

Beispiele für Broenstedt-Säuren sind, z.B. Salzsäure, Organomineralsäuren, z.B. Dibutylphosphat, weiterhin Adipinsäure, Äpfelsäure, Bernsteinsäure, Traubensäure oder Zitronensäure.

Die erfindungsgemäßen Polycarbonatpolyole können anschließend vorzugsweise über eine Prepolymerstufe zu Polyurethan-Werkstoffen (PUR) weiterverarbeitet werden, indem die erfindungsgemäßen Polycarbonatpolyole, ggf. unter Mitverwendung von kurzkettigen organischen Verbindungen mit Hydroxyl- und/oder Aminoendgruppen und/oder Wasser, mit Polyisocyanaten, vorzugsweise Diisocyanaten umgesetzt werden.

Ein weiterer Gegenstand der Erfindung sind demnach NCO-Prepolymere basierend auf bzw. enthaltend die erfindungsgemäßen Polycarbonatpolyole als Aufbaueinheit. Insbesondere erfindungsgemäß sind NCO-Prepolymere mit einem NCO-Gehalt von 3 bis 15 Gew.-% erhältlich durch Umsetzung von erfindungsgemäßen Polycarbonatpolyolen und mindestens einem Polyisocyanat aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), oder deren Mischungen, Gemische aus 2,4'- und 4,4'-MDI sowie carbodiimid-/uretonimin-modifizierten MDI-Derivaten und höherkernigen Homologen der Diphenylmethan-Reihe, Diisocyanatotoluole, Hexamethylendiisocyanat, Isophorondiisocyanat oder deren Mischungen im molaren Überschuss, bevorzugt in einem Verhältnis von NCO- zu OH-Gruppen von1,8:1 bis 10:1, bevorzugt 2,0:1 bis 5:1, besonders bevorzugt 2,1:1 bis 3:1.

Ein weiterer Gegenstand der Erfindung sind Polyurethanelastomere bzw. Polyurethanharnstoffelastomere basierend auf bzw. enthaltend die erfindungsgemäßen NCO-Prepolymere.

Insbesondere erfindungsgemäß sind Polyurethanelastomere bzw. Polyurethanharnstoffelastomere erhältlich durch Umsetzung von erfindungsgemäßen NCO-Prepolymeren mit (i) mindestens einem aliphatischen Diol mit primären Hydroxylgruppen und zahlenmittleren Molekulargewicht von 62 bis 202 und in Mengen von 0-10 Gew.-%, bezogen auf das mindestens eine aliphatische Diol, Verbindungen aus der Gruppe bestehend aus kurzkettigen Polyolen mit Funktionalitäten >2 bis 4 und höhermolekularen Polyolen mit einer Funktionalität von 2 und erfindungsgemäßen Polycarbonatpolyolen oder (ii) mindestens einem aromatischen diaminischen Kettenverlängerern aus der Gruppe bestehend aus 4,4'-Methylen-bis-(2-chloroalinin) (MBOCA), 3,3', 5,5'-Tetraisopropyl-4,4'-diaminodiphenylmethan, 3,5-Dimethyl-3',5'-diisopropyl-4,4'-diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin, 3,5-Diamino-4-chlorobenzoesäure-isobutylester oder deren Mischungen in Anwesenheit von gegebenenfalls Wasser und gegebenenfalls weiteren Hilfs- und Zusatzstoffen.

Bevorzugt werden als aliphatische Diole Butandiol, Hexandiol, 1,4-Cyclohexandiol, 2,2'-Thiodiethanol oder Mischungen davon eingesetzt.

Bei Einsatz von Wasser als Kettenverlängerer und/oder als Treibmittel weisen die Polyurethanelastomere bevorzugt Dichten von 0,3 bis 0,95 $g/cm^3$ auf, bevorzugt 0,5 bis 0,9.

Die Polyurethan- und die Polyurethanharnstoffelastomere werden bevorzugt nach dem Gießverfahren hergestellt, wobei man im Wesentlichen zwei Prozesse unterscheidet: Zum einen das NCO-Prepolymerverfahren, bei dem langkettiges Polyol und stöchiometrisch überschüssiges Polyisocyanat zu einem NCO-Gruppen aufweisenden Prepolymer umgesetzt werden und dann mit einer kurzkettigen organischen Verbindung mit Hydroxyl- oder Aminoendgruppen und/oder Wasser kettenverlängert wird. Zum anderen können Polyurethangießelastomere auch nach dem one-shot-Verfahren hergestellt werden, bei dem langkettiges Polyol und kurzkettige organische Verbindungen mit Hydroxyl- oder Aminoendgruppen und/oder Wasser gemischt werden und dann mit Polyisocyanat umgesetzt werden.

Aus den erfindungsgemäßen Polycarbonatpolyolen können neben Polyurethangießelastomeren auch thermoplastisch verarbeitbare Polyurethanelastomere nach den dem Fachmann bekannten Verfahren hergestellt werden.

Zusätzlich zu den erfindungsgemäß eingesetzten Komponenten können bei der Herstellung der Polyurethan- oder Polyurethanharnstoffelastomere die üblichen Katalysatoren und Hilfsmittel verwendet werden.

Beispiele für Katalysatoren sind Trialkylamine, Diazabicyclooctan, Zinn-dioctoat, Dibutylzinndilaurat, N-Alkylmorpholin, Blei-, Zink-, Kalzium-, Magnesiumoctoat, die entsprechenden Naphthenate, p-Nitrophenolat.

Beispiele für Stabilisatoren sind Broenstedt- und Lewis-Säuren, z.B. Salzsäure, Benzoylchlorid, Organomineralsäuren, z.B. Dibutylphosphat, weiterhin Adipinsäure, Äpfelsäure, Bernsteinsäure, Traubensäure oder Zitronensäure.

Beispiele für UV-Schutzmittel und Hydrolyseschutzmittel sind beispielsweise 2,6-Dibutyl-4-methylphenol und Carbodiimide.

Einbaufähige Farbstoffe, die ebenfalls eingesetzt werden können, sind solche, die über Zerewitinoff aktive Wasserstoffatome verfügen, die mit NCO-Gruppen abreagieren können.

Unter Zerewitinoff aktiven Wasserstoffatomen werden solche verstanden, die an Stickstoff, Sauerstoff oder Schwefel gebunden, aktiv sind, d. h. sich vergleichsweise leicht als Proton abspalten lassen, und eine gewisse Acidität aufweisen. Zerewitinoff aktive Wasserstoffatome von Carboxy-, Hydroxy-, Amino- und Imino- sowie Thiol-Gruppen lassen sich nach einem von T. Zerewitinoff gefundenen Verfahren (Zerewitinoff-Reaktion, Zerewitinoff-Bestimmung) zur Konstitutionsermittlung organischer Verbindungen ermitteln. Umsetzung der aciden Verbindung mit Methylmagnesiumiodid in Butylethern oder anderen Ethern (Zerewitinoffs Reagenz, Gleichung z. B. $ROH + CH_3MgI \rightarrow ROMgI + CH_4$) ermöglicht die Bestimmung der Anzahl aktiver Wasserstoff-Atome, durch gasvolumetrische Messung des entstehenden Methans (ein Äquivalent pro aktivem Wasserstoff-Atom). Auch der aktive Wasserstoff von C-H-aciden Verbindungen (Carbonyl-Verbindungen, Nitrile, Alkine, Nitro-Verbindungen, Sulfone) lässt sich in Einzelfällen so quantitativ erfassen.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2nd edition, Carl Hanser Verlag, München, 1994, Kap. 3.4. enthalten.

Die Verwendung der erfindungsgemäßen Polyurethanelastomere liegt im Bereich technischer Bauteile, ist demzufolge äußerst vielfältig und umfasst beispielsweise Walzenbeschichtungen, Schuhpressmäntel in der Papierindustrie, Molche, Molchscheiben, Dichtungen, Pipe-Coatings in der Öl-und Gasindustrie, Versteifungselemente für Rohre und Kabel in der Offshore-Industrie, Förderbänder und Siebe im Bergbaubereich, sowie Rakel, Räder, Rollen, oder Elektrovergussmasse.

Ebenfalls Gegenstand der Erfindung sind demnach technische Bauteile, Walzenbeschichtungen, Schuhpressmäntel, Elektrovergussteile, Molche, Molchscheiben, Dichtungen, Pipe-Coatings, Versteifungselemente für Rohre oder Kabel Rakel, Räder, Rollen, Förderbänder oder Siebe enthaltend die erfindungsgemäßen Polyurethan- und Polyurethanharnstoffelastomeren.

Die Erfindung soll anhand der nachfolgenden Beispiele näher erläutert werden.

**Experimenteller Teil**

**Rohstoffe**

| | |
|---|---|
| Diphenylcarbonat | Lanxess AG |
| Hexandiol | BASF SE |
| Diethylenglykol | Ineos GmbH |
| Polytetrahydrofuran 650 | OHZ 174,7 mg KOH/g von Sigma-Aldrich |
| Polytetrahydrofuran 1000 | OHZ 113,7 mg KOH/g der Fa. Invista, |
| Polytetrahydrofuran 2000 | OHZ 55,8 mg KOH/g der BASF SE |
| Dibutylphosphat | Fluka |
| TEG | Tetraethylenglykol der Fa. Sigma Aldrich |
| Magnesiumhydroxidcarbonat Pentahydrat | Merck |
| Desmodur® 0118 T | Monomeres Diphenylmethan-4,4'-diisocyanat (MDI) mit einem Molekulargewicht von 250 g/mol und einem NCO-Gehalt von 33,6 Gew.-% NCO der Fa. Covestro Deutschland AG |
| Baytec C2208 | Polycarbonatpolyol ohne Ethergruppen der Fa. Covestro Deutschland AG mit einer Hydroxylzahl von ca. 56 mg KOH/g, einer Funktionalität von 2 und einer Viskosität von 1600 mPas (75°C). |
| Butandiol: | 1,4-Butandiol der Fa. Sigma Aldrich |
| Baytec XL B: | Standardvernetzer der Fa. Covestro Deutschland AG für die Herstellung von Heißgieß- und Kaltgieß-Polyurethanelastomeren mit einer Hydroxylzahl von ca. 1245 mg KOH/g und einem Schmelzpunkt von ca. 19,5 °C. |
| Baytec XL TR: | Vernetzer der Fa. Covestro Deutschland AG für die Herstellung von Heiß- und Kaltgieß-Polyurethanelastomeren, der Raumtemperatur in farblosen Schuppen vorliegt, welche oberhalb von 60°C zu einer ebenfalls farblosen Flüssigkeit schmelzen. Die Hydroxylzahl beträgt OH-Zahl ca. 1254 mg KOH/g. |
| Baytec VP.PU 0385: | Ethergruppen aufweisendes Polycarbonatpolyol der Fa. Covestro Deutschland AG mit einer Hydroxylzahl von 56 mg KOH/g und einer Funktionalität von 2. |

**Analysenmethoden**

| | |
|---|---|
| Hydroxylzahl: | Die Bestimmung der OH-Zahl erfolgte gemäß der Vorschrift der DIN 53240-1 (Verfahren ohne Katalysator, Fassung v. Juni 2013). |
| Aminzahl: | Gesamtbasenzahl gemäß DIN 51639-1 in der Fassung von Nov. 2014 |
| Säurezahlen | wurden gemäß DIN EN ISO 2114 (Juni 2002) bestimmt. |

(fortgesetzt)

| | |
|---|---|
| Viskosität: | Dynamische Viskosität: Rheometer MCR 51 der Firma Anton Paar entsprechend DIN 53019-1 (Fassung v. September 2008) mit einem Messkegel CP 50-1, Durchmesser 50 mm, Winkel 1° bei Scherraten von 25, 100, 200 und 500 s$^{-1}$. Die erfindungsgemäßen und nicht erfindungsgemäßen Polyole zeigen von der Scherrate unabhängige Viskositätswerte. |

Zur photometrischen Bestimmung von aromatischen Endgruppen (Phenoxy- und Phenylcarbonat) sowie freiem Phenol in Polycarbonatpolyolen wurde ein Lambda 25 UV/Vis-Spektrometer der Fa. Perkin Elmer verwendet.

| | |
|---|---|
| DSC max: | DIN EN ISO 11357-1, Fassung v. März 2010. In °C angegebenes Peakmaximum (Endotherm) einer Aufheizkurve von - 40 °C bis +100 °C, Heizrate 10 °C/min, bestimmt mit Hilfe eines DSC-Gerätes Q20 der Fa. TA Waters, wobei die Probe vor der Messung für mehr als 4 Wochen bei Raumtemperatur gelagert wurde. |
| Shore Härte: | DIN ISO 7619-1; Fassung v. Feb. 2012 |
| Spannung 100%, Spannung 300%, Reißspannung und Reißdehnung: | DIN 53504 (Fassung v. 1.10.2009) |
| Weiterreißfestiekeit: | ISO 34-1 (Fassung v. 1.9.2016). Es wurden winkelförmige Probenkörper verwendet |
| Stoßelastizität: | DIN 53512 (Fassung v. 1.4.2000) |
| Abrieb | DIN ISO 4649 (Fassung v. März 2014) |
| Dichte | DIN EN ISO 1183-1 (Fassung v. April 2014) |
| DVR -Druckverformungsrest, | 22 Std. 70 °C gemäß ISO 815-1 (Fassung v. 1.9.2016) |
| Glasübersansstemperatur, Dynamisch mechanische Analyse, DMA: | |
| | Die Glasübergangstemperatur wurde mittels Dynamisch Mechanischer Analyse (DMA) gemäß der Vorschrift des Geräteherstellers bestimmt, wobei ein DMA 2980-Gerät der Firma TA Instruments verwendet wurde und wobei die Messung im sogenannten Single Cantilever-Modus erfolgte (Datum/Fassung nicht aus der Betriebsanleitung ersichtlich). Als Glasübergangstemperatur wird die Temperatur angegeben, bei der die tan δ-Kurve ein Maximum aufweist. Hierbei wurde die Probe bei -80 °C äquilibriert und anschließend bei einer Amplitude von 100 μm, einer Frequenz von 1 Hz mit einer Heizrate von 3 °C/min bis maximal 230 °C erwärmt. Kennzahl: Bezeichnet das mit 100 multiplizierte molare Verhältnis von NCO- zu NCO-reaktiven Gruppen einer Rezeptur |
| Gießzeit: | Zeit, die vom Ende des Einrührens des Vernetzers bis zu einem merklichen Viskositätsanstieg der Reaktionsmasse vergeht. Wird die Gießzeit überschritten, so kann die reagierende Schmelze nicht mehr vergossen werden, ohne dass es zu Qualitätseinbußen, beispielsweise Lufteinschlüssen, schlechte visuelle Oberflächenqualität, bis hin zu mangelhaften physikalischen Eigenschaften im fertigen Bauteil kommt. |
| Abhebezeit: | Zeit, die eine auf eine heiße Oberfläche (110 °C) gegossene Reaktionsmasse benötigt, um formstabil von dieser Oberfläche abgehoben werden zu können. |
| Tischtemperatur: | Temperatur des Gießtisches, 110 °C |
| Formtemperatur: | Temperatur der Form, 110 °C. |
| Entformungszeit: | Die Zeit, die benötigt wird, um einen bei 110 °C Formtemperatur gegossenen Prüfkörper dimensionsstabil und klebfrei entformen zu können. |

Im Falle NDI basierter Rezepturen werden die Prüfkörper unmittelbar nach Entformung für 24 Std. bei 110 °C in einem Umlufttrockenschrank thermisch nachbehandelt. Vor der Bestimmung der mechanischen Eigenschaften werden die Prüfkörper für 4 Wochen bei Raumtemperatur und ca. 50% rel. Luftfeuchtigkeit gelagert.

**Ausführungsbeispiele**

**1.) Synthese der Polycarbonatpolyole, zweistufiges Verfahren (erfindungsgemäß)**

Die erfindungsgemäßen Bsple. A-1 bis A-5 wurden nach folgendem Verfahren hergestellt:

Beispiel A-1: Polycarbonatpolyol aus Polytetrahydrofuran. Diethylenglykol und Hexandiol

In einer Destillationsapparatur bestehend aus einem 10 Liter-Vierhalskolben, Heizpilz, Thermofühler, Schliffolive zur Einleitung von Stickstoff, Rührer, Kolonne, beheizte (45 °C) Destillationsbrücke, absteigender, beheizter (45 °C) Claisenkühler mit beheiztem (45 °C) Hahn, Zweihalskolben als Vorlage, Thermometer für Kopftemperatur, Membranpumpe, und Ölpumpe wurden 4386,9 g (20,38 Mol) Diphenylcarbonat, 2054 g (17,35 Mol) Hexandiol, 474 g (4,47 Mol) Diethylenglykol und 122 mg Magnesiumhydroxidcarbonat Pentahydrat vorgelegt und langsam unter Rühren auf 180°C unter $N_2$-Überlagerung erhitzt. Man rührte bei 180 °C für 2 Stunden bei Normaldruck und kühlt dann auf 110 °C ab und legte Vakuum an. Bei Erreichen von 15 mbar wurde Phenol abdestilliert, wobei die Kopftemperatur maximal 80 °C betrug. Bei Verlangsamung der Phenoldestillation wurde die Sumpftemperatur in kleinen Schritten auf zuletzt 200 °C angehoben. Unter diesen Reaktionsbedingungen wurde die Umsetzung für eine Stunde vervollständigt.
Im Anschluss wurde der Druck auf ca. 0,5 bis 1 mbar reduziert um Reste von Phenol zu entfernen. Die Auswaage Phenol betrug 3848 g (theoret. 3850 g). Nach Abkühlen auf ca. 80 °C wurde eine Probe zur Bestimmung der OH-Zahl und der Endgruppen entnommen:

OH-Zahl: 46,3 mg KOH/g
Endgruppen: Phenylcarbonatendgruppen 0,07 Gew.-%, Phenol und Phenoxyendgruppen: nicht nachweisbar

Die Masse des so erhaltenen Zwischenproduktes wurde zu 3007 g bestimmt und mit 506 g Polytetrahydrofuran 1000 (OH-Zahl 113,7 mg KOH/g) versetzt. Man erhitzt unter $N_2$-Überlagerung unter Rühren für 6 Stunden auf 200 °C. Nach Abkühlen auf ca. 80 °C wurde eine Probe zur Bestimmung der OH-Zahl und der Viskosität entnommen. Anschließend wurde durch Einrühren von 720 mg Dibutylphosphat bei 80°C neutralisiert.

OH-Zahl: 57,8 mg KOH/g
Viskosität: 2200 mPas (75 °C)

**2.) Synthese der Polycarbonatpolyole, einstufiges Verfahren (nicht erfindungsgemäß)**

Die nicht erfindungsgemäßen Bsple. A-6 und A-7 wurden nach folgendem Verfahren hergestellt:

Beispiel A-6: Polycarbonatpolyol aus Polytetrahydrofuran 1000, Diethylenglykol und Hexandiol

In einer Destillationsapparatur bestehend aus einem 10 Liter-Vierhalskolben, Heizpilz, Thermofühler, Schliffolive zur Einleitung von Stickstoff, Rührer, Kolonne, beheizte (45 °C) Destillationsbrücke, absteigender, beheizter (45 °C) Claisenkühler mit beheiztem (45 °C) Hahn, Zweihalskolben als Vorlage, Thermometer für Kopftemperatur, Membranpumpe, und Ölpumpe wurden 4214 g (19,67 Mol) Diphenylcarbonat, 2436,6 g (20,76 Mol) Hexandiol, 1044,3 g (1,05 Mol) Polytetrahydrofuran 1000 und 160 mg Magnesiumhydroxidcarbonat Pentahydrat vorgelegt und langsam unter Rühren auf 180°C unter $N_2$-Überlagerung erhitzt. Man rührte bei 180 °C für 2 Stunden bei Normaldruck und kühlt dann auf 110 °C ab und legte Vakuum an. Da beim Erreichen von 15 mbar kein Phenol abdestillierte (im Unterschied zu den erfindungsgemäßen Beispielen) wurde die Temperatur schrittweise erhöht, wobei die Phenoldestillation bei 145 °C Sumpftemperatur in geringem Umfang einsetzte, wobei die Kopftemperatur jedoch rasch auf 110 °C anstieg und Hexandiol an Stelle von Phenol abdestilliert wurde (im Unterschied zu den erfindungsgemäßen Beispielen). Mehrfaches Absenken der Sumpftemperatur auf 140 °C beendete zwar die unerwünschte Destillation des Hexandiols, führte aber nicht zur Nachbildung weiterer Phenols, d.h. bei Steigern der Sumpftemperatur stieg die Kopftemperatur wiederholt auf 110 °C.
Der Ansatz wurde verworfen.

**3.) Synthese der Polycarbonatpolyole, einstufiges Verfahren (nicht erfindungsgemäß)**

Die nicht erfindungsgemäßen Bsple. A-8 und A-9 wurden nach folgendem Verfahren hergestellt:

Beispiel A-8: Polycarbonatpolyol aus Diethylenglykol und Hexandiol

In einer Destillationsapparatur bestehend aus einem 6 Liter-Vierhalskolben, Heizpilz, Thermofühler, Schliffolive zur Einleitung von Stickstoff, Rührer, Kolonne, beheizte (45°C) Destillationsbrücke, absteigender, beheizter (45°C) Claisenkühler mit beheiztem (45°C) Hahn, Zweihalskolben als Vorlage, Thermometer für Kopftemperatur, Membranpumpe, und Ölpumpe wurden 2865,1 (13,38 Mol) Diphenylcarbonat, 1181 g (10,06 Mol) Hexandiol, 468,6 g (4,42 Mol) Diethylenglykol und 80 mg Magnesiumhydroxidcarbonat Pentahydrat vorgelegt und langsam unter Rühren auf 180°C unter $N_2$-Überlagerung erhitzt. Man rührte bei 180°C für 2 Stunden bei Normaldruck und kühlte dann auf 110°C ab und legte Vakuum an.

Bei Erreichen von 15 mbar wurde Phenol abdestilliert, wobei die Kopftemperatur maximal 80°C betrug.

Bei Verlangsamung der Phenoldestillation wurde die Sumpftemperatur in kleinen Schritten auf zuletzt 200°C angehoben. Unter diesen Reaktionsbedingungen wurde die Umsetzung für eine Stunde vervollständigt.

Im Anschluss wurde der Druck auf ca. 0,1 bis 0,5 mbar reduziert um Reste von Phenol zu entfernen. Die Auswaage Phenol betrug 2517 g (theoret. 2515 g). Nach Abkühlen auf ca. 80°C wurde eine Probe zur Bestimmung der OH-Zahl und der Endgruppen entnommen Anschließend wurde durch Einrühren von 470 mg Dibutylphosphat bei 80°C neutralisiert.

OH-Zahl: 48,4 mg KOH/g

Endgruppen: Phenylcarbonatendgruppen 0,02 Gew.-%, Phenol 0,01 Gew.-% und Phenoxyendgruppen 0,04 Gew.-%.

Viskosität: 4480 mPas (75 °C)

**Tabelle 1:** Rezepturen und analytische Daten von erfindungs- und nicht erfindungsgemäßen Polycarbonatpolyolen

| Beispiel | | A-1, erf. gem. | A-2, erf. gem. | A-3, erf. gem. | A-4, erf. gem. | A-5, erf. gem. | A-6, Vgl. | A-7, Vgl. | A-8, Vgl. | A-9, Vgl. |
|---|---|---|---|---|---|---|---|---|---|---|
| **Formulierung:** | | | | | | | | | | |
| Diphenylcarbonat | [g] | 4386,9 | 4362,7 | 4150,2 | 3031,0 | 4307,0 | 4214,2 | 4319,0 | 2865,1 | 2533,7 |
| Hexandiol-1,6 | [g] | 2054,0 | 2562,7 | 2479,6 | 1814,0 | 1910,3 | 2436,6 | 2427,6 | 1181,0 | 1255,7 |
| Polytetrahydrofuran 650 | [g] | - | - | - | - | - | - | 1040,4 | - | - |
| Polytetrahydrofuran 1000 | [g] | 506 | 540 | - | - | 930,0 | 1044,3 | - | - | - |
| Polytetrahydrofuran 2000 | [g] | - | - | 900 | 1814,0 | - | - | - | - | - |
| Diethylenglykol | [g] | 474 | - | - | - | 536,5 | - | - | 468,6 | - |
| Tetraethylenglykol | [g] | - | - | - | - | - | - | - | - | 434,4 |
| Abdest. Phenol, exp | [g] | 3848 | 3826 | 3637 | 2660 | 3777 | - | - | 2517 | 2226 |
| Abdest. Phenol, theoret | [g] | 3850 | 3829 | 3642 | 2660 | 3780 | 3699 | 3791 | 2515 | 2224 |
| Magnesiumhydroxidcarbonat | [mg] | 148 | 138 | 160 | 160 | 160 | 160 | 320 | 80 | 80 |
| Dibutylphosphat | [mg] | 866 | 807 | 937 | 933 | 933 | - | - | 468 | 468 |
| **Berechnete Eigenschaften:** | | | | | | | | | | |
| Carbonatgr. pro kg Produkt | [mol/kg] | 5,57 | 5,53 | 4,87 | 3,56 | 5,03 | - | - | 6,69 | 5,92 |
| Ethergruppen pro kg Produkt | [mol/kg] | 3,39 | 2,15 | 3,58 | 6,27 | 4,56 | - | - | 2,21 | 3,36 |
| mol. Verhältnis Carbonat-/Ethergruppen | [mol/kg/mol/kg]] | 1,64 | 2,57 | 1,36 | 0,57 | 1,10 | - | - | 3,03 | 1,76 |
| **Eigenschaften:** | | | | | | | | | | |
| OH-Zahl Vorstufe (exp.) | [mgKOH/g] | 46,3 | 34,8 | 44,7 | 55,2 | 37,6 | - | - | - | - |
| OH-Zahl Endprodukt (exp.) | [mgKOH/g] | 57,8 | 54,8 | 55,8 | 50,0 | 52,0 | - | - | 48,4 | 52,9 |
| Viskosität bei 75°C | [mPa*s] | 2200 | 2130 | 1680 | 2600 | 2540 | - | - | 4480 | 2210 |
| DSC max. | [°C] | 33 | 47 | 47 | 43 | 15 | - | - | amorph | 33 |

(fortgesetzt)

| Eigenschaften: | | | | | | | | | | |
|---|---|---|---|---|---|---|---|---|---|---|
| Phenoxy-Endgruppen | [Gew.-%] | 0 | 0 | 0 | 0 | 0 | - | - | 0,044 | 0,033 |
| Phenol | [Gew.-%] | 0 | 0 | 0 | 0,02 | 0 | - | - | 0,011 | 0,085 |
| Phenylcarbonat -Endgruppen | [Gew.-%] | 0,07 | 0,21 | 0,22 | 0 | 0,09 | - | - | 0,017 | 0 |
| Fahrweise | | 2-stufig | 2-stufig | 2-stufig | 2-stufig | 2-stufig | 1-stufig Abbruch | 1-stufig Abbruch | 1-stufig | 1-stufig |

**4.) Synthese von NCO-Prepolymeren**

Die Synthese der NCO-Prepolymeren erfolgte durch Umsetzung der Polycarbonatpolyole Bsple. A-1 bis A-5 und A-8 bis A-10 aus Tabelle 1 mit Desmodur 0118T:

Beispiel B-1 (erfindungsgemäß):

In einem 6 1-Dreihalskolben, versehen mit einem Heizpilz, Rührwerk und Innenthermometer wurden 1850 g (7,4 Mol) Desmodur 0118T unter Stickstoffüberschleierung bei 50°C unter Rühren vorgelegt. Dann wurden 3001 g eines auf 80°C vorgewärmten Polycarbonatpolyols aus Beispiel A-1 im Verlauf von ca. 10 Minuten unter Rühren zugegeben. Anschließend wurde bei 80°C unter Stickstoff weitergerührt. Nach 2 Stunden war die Reaktion beendet. Der NCO-Gehalt betrug 10,04 Gew.-% und die Viskosität 1760 mPas (bei 75°C).

**Tabelle 2:** Rezepturen und analytische Daten der MDI-basierten NCO-Prepolymere; die Einwaagen ergeben sich aus den Hydroxylzahlen der Polyole und dem NCO-Gehalt des Desmodur 0118T.

| Beispiel: | Prepolymer | B-1 erf. gem. | B-2 erf. gem | B-3 erf.gem | B-4 erf. gem. | B-5 erf. gem. | B-8 (V) | B-9 (V) |
|---|---|---|---|---|---|---|---|---|
| Polyol aus Bspl. | Einwaage | | | | | | | |
| A-1, erf. gem. | [g] | X | - | - | - | - | - | - |
| A-2, erf. gem | [g] | - | X | - | - | - | - | - |
| A-3, erf. gem | [g] | - | - | X | - | - | - | - |
| A-4, erf. gem | [g] | - | - | - | X | - | - | - |
| A-5, erf. gem | [g] | - | - | - | - | X | - | - |
| A-8, Vgl | [g] | - | - | - | - | - | X | - |
| A-9, Vgl | [g] | - | - | - | - | - | - | X |
| Baytec C2208 | [g] | - | - | - | - | - | - | - |
| | | | | | | | | |
| Desmodur 118T | [g] | X | X | X | X | X | X | X |
| | | | | | | | | |
| NCO-Gehalt | [Gew.-% NCO] | 10,04 | 9,9 | 10 | 10,1 | 9,9 | 10,0 | 9,98 |
| Viskosität, 75 °C | [mPas] | 1760 | 2010 | 1890 | 2230 | 2020 | 4480 | 2210 |

**5.) Herstellung von Gießelastomeren auf Basis von 4,4'-Diphenylmethandiisocyanat (MDI)**

Beispiel C-1, erfindungsgemäß:

100 Teile. eines auf 70°C vorgewärmten und entgasten Prepolymeren (aus Beispiel B-1) wurden mit 10,15 Teilen. 1,4-Butandiol 30 Sekunden verrührt. Die reagierende Schmelze wurde in 115°C heiße Metallformen gegossen und für 24 Std. bei 110°C nachgetempert. Nach 21 Tagen Lagerung bei Raumtemperatur wurden die mechanischen Daten bestimmt (Tabelle 3). Alle Mengenangaben sind Gewichtsangaben.
Die erfindungsgemäßen Beispiele C-2 bis C-5 und die Vergleichsbeispiele C8 bis C-9(V) wurden wie unter obigem Beispiel C-1 beschrieben hergestellt.

**Tabelle 3:** Herstellung und Eigenschaften von Polyurethan- und Polyurethanharnstoffelastomeren C-1 bis C-9 (V) durch Umsetzung der MDI Prepolymere (B-1 bis B-10 (V)) mit Butandiol; die Gewichtsteile MDI-Prepolymer und Butandiol ergeben sich aus dem NCO-Gehalt des Prepolymeren und der angebenen Kennzahl.

| | | C-1 erf. gem. | C-2 erf. gem. | C-3 erf.gem. | C-4 erf. gem. | C-5 erf. gem. | C-8 (V) | C-9 (V) |
|---|---|---|---|---|---|---|---|---|
| **Rezeptur:** | | | | | | | | |
| Prepolymer | | B-1 erf. gem. | B-2 erf. gem. | B-3 erf.gem. | B-4 erf. gem. | B-5 erf. gem. | B-8 (V) | B-9 (V) |
| MDI-Prepolymer | [Tle.] | X | X | X | X | X | X | X |
| NCO-Gehalt Prep | [%] | 10,04 | 9,9 | 10 | 10,1 | 9,9 | 10,0 | 9,98 |
| Viskosität (70°C) | [mPas] | 2750 | 3085 | 2965 | 2970 | 2965 | 4330 | 2810 |
| Butandiol | [Tle.] | X | X | X | X | X | X | X |
| Kennzahl | | 103 | 103 | 103 | 103 | 103 | 103 | 103 |
| **Verarbeitung:** | | | | | | | | |
| Prepolymertemperatur | [°C] | 70 | 70 | 70 | 70 | 70 | 70 | 70 |
| Gießzeit | [s] | 250 | 260 | 250 | 220 | 250 | 180 | 180 |
| Entformungszeit | [min] | - | - | - | - | - | 60 | 60 |
| **Mechanische Eigenschaften:** | | | | | | | | |
| Shore A | | 97A | 95,5A | 96A | 97A | 95,5A | 98A | 98A |
| Shore D | | 53D | 47D | 48D | 53D | 47D | 55D | 58D |
| Spannung 100% | [MPa] | 15,7 | 15,7 | 14,5 | 13,3 | 13,2 | 18,3 | 16,2 |
| Spannung 300% | [MPa] | 32,4 | 41,6 | 33,9 | 26 | 32 | 30,3 | 34 |
| Reißspannung | [MPa] | 52 | 57 | 47 | 54 | 52 | 49 | 44 |
| Reißdehnung | [%] | 410 | 382 | 391 | 474 | 417 | 414 | 400 |
| Weiterreißfestigkeit, ohne Einkerbung | [kN/m] | 159 | 151 | 149 | 152 | 152 | 176 | 163 |
| Weiterreißfestigkeit, mit Einkerbung | [kN/m] | 112 | 82 | 82 | 101 | 69 | 124 | 104 |
| Stoßelastizität | [%] | 42 | 42 | 42 | 48 | 43 | 41 | 45 |
| Abrieb | [mm³] | 65 | 65 | 55 | 50 | 45 | 66 | 89 |
| Dichte | [g/mm³] | 1,19 | 1,18 | 1,17 | 1,16 | 1,19 | 1,16 | 1,16 |
| DVR 22 Std. 70 °C | [%] | 52 | 43 | 46 | 47 | 46 | 36 | 34 |
| Glasübergangstemperatur, DMA | [°C] | -9,0 | -13,9 | -13,4 | nicht bestimmt | -12,1 | 5,8 | -2,7 |

Die Tabelle 3 zeigt, dass die erfindungsgemäßen Gießelastomere C-1 bis C-5 hinsichtlich des Zug-Dehnungsverhaltens das gegebene Werteniveau veranschaulicht durch die nicht erfindungsgemäßen Beispiele C-8(V) bis C-10(V) gut erreichen. Gleiches gilt auch für die Weiterreißfestigkeiten, das Abriebverhalten, sowie mit kleinen Abstrichen auch für den Druckverformungsreste (DVR). Dabei weisen die erfindungsgemäßen Gießelastomere allerdings niedrigere Glasübergangstemperaturen auf und zeigen damit ein vorteilhaftes Tieftemperaturverhalten.

**Patentansprüche**

1. Polycarbonatpolyole mit einer OH-Zahl von 40 bis 80 mg KOH/g gemäß DIN 53240-1 vom Juni 2013 (ohne Katalysator) und einer mittleren Funktionalität von 1,9 bis 2,2 enthaltend das Umsetzungsprodukt aus

    A) mindestens einem $\alpha,\omega$-Alkandiol mit 4 bis 8 C-Atomen und
    B) mindestens einem Polytetrahydrofuran und ggf.
    C) Diethylenglykol
    mit mindestens einer
    D) Carbonylkomponente ausgewählt aus der Gruppe bestehend aus Diarylcarbonaten, Dialkylcarbonaten, zyklischen Alkylencarbonaten und $COCl_2$, besonders bevorzugt Diphenylcarbonat und/oder deren Mischungen.

2. Polycarbonatpolyole nach Anspruch 1, **dadurch gekennzeichnet, dass** das mindestens eine $\alpha, \omega$-Alkandiol mit 4 bis 8 C-Atomen (A) ausgewählt ist aus der Gruppe bestehend aus 1,4-Butandiol, 2-Methylpropandiol-1,3, 1,5-Pentandiol, 3-Methylpentandiol-1,5, 1,6-Hexandiol und 1,8-Octandiol, bevorzugt 1,6-Hexandiol, und/oder deren Mischungen.

3. Polycarbonatpolyole nach Anspruch 1 oder 2, **dadurch gekennzeichnet**, und dass das mindestens eine Polytetrahydrofuran (B) zahlenmittlere Molekulargewichte im Bereich von 250 bis 2900 Da aufweist.

4. Polycarbonatpolyole nach Anspruch 1, 2 oder 3, **dadurch gekennzeichnet, dass** das molare Verhältnis von Carbonatgruppen zu Ethergruppen im Bereich von 0,2:1 bis 3,5:1 liegt.

5. Polycarbonatpolyole nach Anspruch 1,2 3 oder 4, **dadurch gekennzeichnet, dass** bei einer für mehr als 4 Wochen bei Raumtemperatur gelagerten Probe ein mittels DSC gemäß DIN EN ISO 11357-1 vom März 2010 bei einer Heizrate von 10 °C/min bestimmtes Maximum eines Schmelzendotherms im Bereich von 9 bis 59 °C liegt.

6. Verfahren zur Herstellung von Polycarbonatpolyolen nach mindestens einen der Ansprüche 1 bis 5, **dadurch gekennzeichnet, dass** ein zweistufiges Verfahren angewendet wird, bei dem
   in einer ersten Stufe in Gegenwart eines Katalysators ein Zwischenprodukt aus

    A) mindestens einem $\alpha, \omega$-Alkandiol mit 4 bis 8 C-Atomen,
    C) ggf. Diethylenglykol und
    D) mindestens einer Carbonylkomponente aus der Gruppe bestehend aus Diarylcarbonaten, Dialkylcarbonaten, Alkylencarbonaten und $COCl_2$, besonders bevorzugt Diphenylcarbonat, und/oder deren Mischungen

    hergestellt wird und in einer zweiten Stufe mit

    B) mindestens einem Polytetrahydrofuran

    umgesetzt wird.

7. Verfahren gemäß Anspruch 6, **dadurch gekennzeichnet, dass** in der zweiten Stufe zusätzlich zu dem

    B) mindestens einen Polytetrahydrofuran

    zum Ausgleich der in der ersten Stufe teilweise entfernten Diole A) und/oder C)

    A) mindestens ein $\alpha, \omega$-Alkandiol mit 4 bis 8 C-Atomen und/oder
    C) Diethylenglykol

    zugegeben wird.

**8.** Verfahren gemäß Anspruch 6, **dadurch gekennzeichnet, dass** in der ersten Stufe die Komponenten A) und/oder C) überschüssig in einer Menge eingesetzt werden, die eine Abweichung von 2 bis 20 Hydroxyzahleinheiten gegenüber der eigentlich angestrebten Hydroxyzahl ergibt.

**9.** NCO-Prepolymere basierend auf den Polycarbonatpolyolen gemäß einem der Ansprüche 1 bis 5.

**10.** NCO-Prepolymere gemäß Anspruch 9 mit einem NCO-Gehalt von 3 bis 15 Gew.-% erhältlich aus Umsetzung von Polycarbonatpolyolen gemäß einem der Ansprüche 1 bis 5 mit mindestens einem Polyisocyanat aus der Gruppe bestehend aus 1,5-Naphthalindiisocyanat, 2,4'-Diphenylmethandiisocyanat (2,4'-MDI), 4,4'-Diphenylmethandiisocyanat (4,4'-MDI), oder deren Mischungen, Gemische aus 2,4'- und 4,4'-MDI sowie carbodiimid-/uretonimin-modifizierten MDI-Derivaten und höherkernigen Homologen der Diphenylmethan-Reihe, Diisocyanattoluole, Hexamethylendiisocyanat, Isophorondiisocyanat oder deren Mischungen im molaren Überschuss.

**11.** Polyurethanelastomere und Polyurethanharnstoffelastomere basierend auf den NCO-Prepolymeren gemäß Ansprüchen 9 oder 10.

**12.** Polyurethanelastomere und Polyurethanharnstoffelastomere erhältlich aus Umsetzung von NCO-Prepolymeren gemäß Ansprüchen 9 oder 10 mit

(i) mindestens einem aliphatischen Diol mit primären Hydroxylgruppen und zahlenmittleren Molekulargewicht von 62 bis 202 und
in Mengen von 0-10 Gew.-% - bezogen auf das mindestens eine aliphatische Diol - Verbindungen aus der Gruppe bestehend aus kurzkettigen Polyolen mit Funktionalitäten >2 bis 4 und
höhermolekularen Polyolen mit einer Funktionalität von 2 und Polycarbonatpolyolen gemäß Anspruch 1 gegebenenfalls in Anwesenheit von Wasser und
gegebenenfalls weiteren Hilfs- und Zusatzstoffen und/oder
(ii) mindestens einem aromatischen diaminischen Kettenverlängerern aus der Gruppe bestehend aus 4,4'-Methylen-bis-(2-chloroanilin) (MBOCA), 3,3',5,5'-Tetraisopropyl-4,4'-diaminodiphenylmethan, 3,5-Dimethyl-3',5'-diisopropyl-4,4'-diaminophenylmethan, 3,5-Diethyl-2,4-toluylendiamin, 3,5-Diethyl-2,6-toluylendiamin (DETDA), 4,4'-Methylen-bis-(3-chloro-2,6-diethylanilin), 3,5-Dimethylthio-2,4-toluylendiamin, 3,5-Dimethylthio-2,6-toluylendiamin, 3,5-Diamino-4-chlorobenzoesäure-isobutylester oder deren Mischungen
gegebenenfalls in Anwesenheit von Wasser und
gegebenenfalls weiteren Hilfs- und Zusatzstoffen.

**13.** Verwendung der Polyurethan- und Polyurethanharnstoffelastomeren gemäß Ansprüchen 11 oder 12 zur Herstellung technischer Bauteile.

**14.** Verwendung der Polyurethan- und Polyurethanharnstoffelastomeren gemäß Ansprüchen 11 oder 12 als Walzenbeschichtungsmaterial oder Schuhpressmäntel, als Molche, Molchscheiben, Dichtungen, Pipe-Coatings, Versteifungselemente für Rohre oder Kabel, Förderbänder oder Siebe, Rakel, Räder, Rollen, oder Elektrovergussmasse.

**15.** Technische Bauteile, Walzenbeschichtungen, Schuhpressmäntel, Elektrovergussteile, Molche, Molchscheiben, Dichtungen, Pipe-Coatings, Versteifungselemente für Rohre oder Kabel Rakel, Räder, Rollen, Förderbänder oder Siebe enthaltend die Polyurethan- und Polyurethanharnstoffelastomeren gemäß Ansprüchen 11 oder 12.

**Europäisches Patentamt**
**European Patent Office**
**Office européen des brevets**

## EUROPÄISCHER RECHERCHENBERICHT

Nummer der Anmeldung

EP 17 20 8595

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2006 002154 A1 (BAYER MATERIALSCIENCE AG [DE]) 19. Juli 2007 (2007-07-19) | 1-5,9-14 | INV. C08G18/76 C08G63/66 C08G18/10 C08G18/44 |
| Y | * Absatz [0020]; Beispiele 2,6 * ----- | 6-8 | |
| Y | EP 0 421 217 A2 (BAYER AG [DE]) 10. April 1991 (1991-04-10) | 6-8 | |
| A | * Seite 5, Zeile 40 - Seite 6, Zeile 6; Anspruch 2 * ----- | 1-5,9-15 | |

RECHERCHIERTE SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 8. Juni 2018 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 8595

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2018

| Im Recherchenbericht angeführtes Patentdokument | Datum der Veröffentlichung | Mitglied(er) der Patentfamilie | Datum der Veröffentlichung |
|---|---|---|---|
| DE 102006002154 A1 | 19-07-2007 | DE 102006002154 A1<br>EP 1979391 A2<br>TW 200738833 A<br>US 2007166552 A1<br>WO 2007082665 A2 | 19-07-2007<br>15-10-2008<br>16-10-2007<br>19-07-2007<br>26-07-2007 |
| EP 0421217 A2 | 10-04-1991 | DE 3932949 A1<br>EP 0421217 A2<br>JP H03124813 A<br>US 5061426 A | 11-04-1991<br>10-04-1991<br>28-05-1991<br>29-10-1991 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

•   DE 3717060 A

**In der Beschreibung aufgeführte Nicht-Patentliteratur**

•   **M.D. LECHNER ; K. GEHRKE ; U. E.H. NORDMEI-ER.** Makromolekulare Chemie. Birkhäuser Verlag, 1993, 327

•   **H. TANAKA ; M. KUNIMURA.** *Polymer Engineering and Science,* 2002, vol. 42 (6), 1333
•   **G. OERTEL.** Polyurethane Handbook. Carl Hanser Verlag, 1994